**Europäisches Patentamt**

**European Patent Office**

**Office européen des brevets**

(19)

(11) **EP 1 128 622 A2**

(12) **EUROPEAN PATENT APPLICATION**

(43) Date of publication:
**29.08.2001 Bulletin 2001/35**

(51) Int Cl.⁷: **H04L 27/26**

(21) Application number: **00310282.9**

(22) Date of filing: **20.11.2000**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **28.02.2000 GB 0004662**<br><br>(71) Applicant: **Virata Limited**<br>**Cambridge CB3 0BL (GB)** | (72) Inventor: **Greaves, David J.**<br>**Cambridge, Cambridgeshire CB1 2DW (GB)**<br><br>(74) Representative: **Cozens, Paul Dennis et al**<br>**Mathys & Squire**<br>**100 Grays Inn Road**<br>**London WC1X 8AL (GB)** |

(54) **Compensation of sampling rate errors for xDSL, using phase balancing**

(57)    A method for compensating for a running phase error due to unsynchronized clocks which can be applied to Discrete Multitone Communication (DMT) and xDSL, to m-arry PSK and to QPSK

## FIG. 1a

**Description**

This invention relates to discrete channel multitone communications (DMT) and to compensating for small errors in clock frequency as a channel crosses between one clock domain and another. The invention can be used in a xDSL (digital subscriber line) communications system, for example where a central office communicates with a remote home station, where the invention is part of the modem at the home station and is applied to either the receive part, or to both the receive and transmit part of the home modem. More particularly, but not exclusively, it can be used in DSL communications which operate at higher bit rates in ATM switching networks.

Reference will be made herein to the G.992. 1 and G 992.2 Standards which specify operating parameters and/or levels of performance that have been agreed in the art of DMT and DSL and which are therefore known. Accordingly, details will not be given of their contents further reference should be made to a suitable source such as www.itu.org,

The problem of small errors occurring in clock frequency, as a DMT channel crosses from one clock domain to another, has been addressed in the past by sample rate conversion but this involved the use of multi-stage digital filters which require a considerable number of digital signal processing cycles.

In a conventional ADSL system employing DMT (such as that disclosed in, for example, US5619505) it is a requirement that the remote modem sends symbols back to the central office at exactly the same average rate as it receives them. The conventional DSL system uses inverse fast Fourier transforms (iFFTs) and fast Fourier transforms (FFTs) at the sender and receiver to respectively generate and detect a tone burst representing the user data. The tone burst is known as a symbol frame or symbol and such symbols are transmitted and received at a rate of 4.135kHz through a DAC at the transmitter and an ADC at the receiver. For the G.992.2 standard, the required sample rate at the ADC of the residential modem is 256 x 4.135 = 1.05856 MHz. To simplify the design of analog anti-aliasing filters, an oversampling ADC is frequently used. An oversampling factor of 8 is typical, and so the ADC is clocked at 8.46848 Msps. In the direction from the central office to the home modem, the transmitter uses a fixed-frequency, free-running oscillator to generate the transmit sample rate and a digital divider chain to produce the symbol rate. At the receiver, in a typical implementation, a voltage controlled crystal oscillator (VCXO) is used as part of a phase-locked loop (PLL) to accurately lock on to and track the transmit oscillator. This VCXO is an expensive analog component.

The present invention provides a method (a) a stream of symbols are transmitted in accordance with a standard symbol rate derived from a clock external to the device; (b) the communications device samples the input symbol stream at a local sampling rate derived from a local clock and thereby creates a received sample stream; and (c) the commmunications device derives a reference sample rate from the received sample stream (which is related to the standard symbol rate and the external clock) for comparison with the local sampling rate;
the method including:

(i) comparing the local sampling rate with the reference sampling rate and determining the error in the local sample rate;
(ii) deriving a timing recovery signal related to the magnitude of the error;
(iii) dividing the local clock rate by a factor related to the timing recovery signal to reduce the error; and
(iv) either removing one or more samples from, or adding one or more samples to the received sample stream, at predetermined intervals, depending on the timing recovery signal to further reduce the error, whereby the difference in sample rates is compensated.

The method is particularly useful where the sample stream contains oversamples. For example, where the system comprises a DMT receiver and the sample stream contains frames of oversamples from which symbols can be derived, each symbol frame including a plurality of carrier frequency channels or bins, which support a number of bits; the compensation being applied so as to cause phase error in the receiver (due to sample rate difference) to be constant on average. Likewise the invention can be embodied in a system which comprises (or further includes) a DMT transmitter, the compensation being applied so as to cause phase error in the transmitter (due to sample rate difference) to be constant on average. Such systems can include a free running oscillator whereby the compensation is applied to correct phase error when a channel crosses between respective clock domains of a transmitter and receiver. This is particularly useful when applied to ADSL or xDSL sample rate conversion. A timing recovery error signal can be derived from the Fast Fourier transforms (FFTs) of the receive samples, the error signal determining when samples are either removed or added to the sample stream at the down sampling stage to compensate for the phase error in the receiver. When used to compensate for the phase error at the transmitter, a (or the) timing error signal can be supplied to the transmitter from the receiver to perform a corresponding operation in the output sample stream.

The invention also applies to a system for implementing the above method. For example, it can apply to any modulation or communication link where coherent phase detection is used (ADSL is one particular example). It can be used for implementation of m-arry PSK (multi-phase phase shift keying) and QPSK.

In the case of xDSL, symbols are transmitted and received at a typical rate of 4.135kHz through a DAC at the transmitter and an ADC at the receiver. A required sample rate (such as that intended to meet the G.992 standard in a receiver), at the ADC of a residential modem is, for example, 256 x 4.135 = 1.05856 MHz. To simplify the design of analog anti-aliasing filters, an oversampling ADC can be used.

An oversampling factor of 8 is typical, and so the ADC is clocked at 8.46848 Msps.

Embodiments of the invention will now be described with reference to the accompanying drawings in which:

Figure 1(a) is a block diagram of the input stages in a prototype receiver;

Figure 1(b) is a block diagram showing details of a free-running hard justify controller used in the receiver shown in Figure 1(a);

Figure 1(c) is a block diagram of a modification to the justify controller of Fig. 1 (b) to operate at symbol boundaries;

Figure 2(a) illustrates a constellation in QAM.

Figure 2(b) is a diagram illustrating the phase error resulting from free-running hard justifications;

Figure 2(c) is a diagram illustrating the phase error resulting from delaying hard justification to boundaries;

Figure 2(d) is a diagram illustrating the phase error after soft justifications are added;

Figure 3(a) is a block diagram showing the input stages in greater detail with a soft justifier stage;

Figure 3(b) illustrates more detail of the soft justifier structure;

Figure 3(c) shows the justify controller with additional soft justification outputs;

Figure 4 is a block diagram of the output stages of a transmitter with soft justifier stage;

Figure 5 indicates a worst case phase error versus frequency for G.992.2 (OSR=8); and

Figure 6 shows a worst case phase error versus frequency for G.992. 1 (OSR=4).

Figure 7 is a further diagram for explaining the invention.

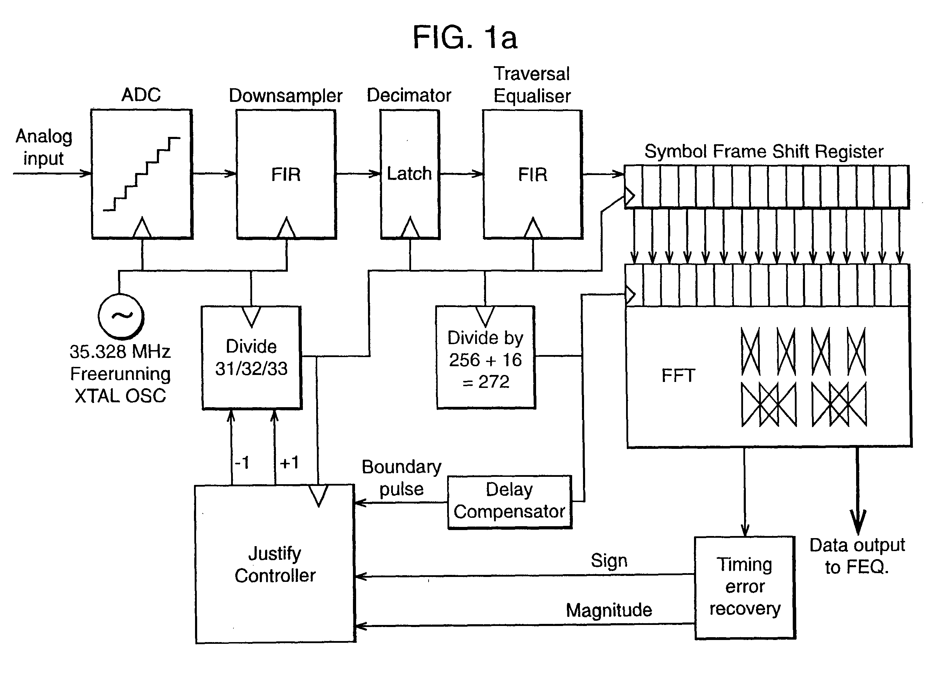

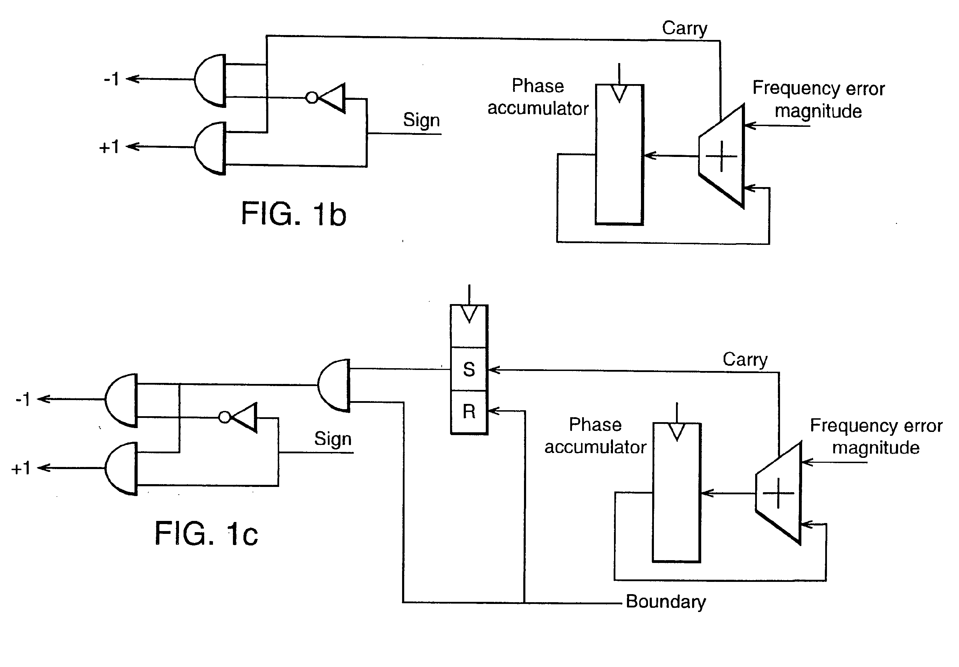

Referring to the drawings, Figure 1 shows the basic block diagram of a G.992 receiver where a free-running oscillator is used instead of a VCXO. Input samples are generated by a high-specification ADC which is clocked from a free-running, local crystal oscillator with an oversampling factor of 32. A high over-sampling factor was used in an attempt to make this prototype receiver work. This required an overly-expensive ADC and performance, in terms of phase jitter, as we shall show was not good.

The oscillator had the correct nominal frequency for reception, but was subject to offsets and slow drifts in frequency owing to manufacturing tolerance, temperature and aging drifts. Similar errors in the transmitting reference oscillator at the central office also contributed to the perceived error at the receiver. In broad terms, the error in frequency can be presumed to be a fraction between +/-50 parts per million (ppm) with a worst case drift of about one part per million each minute. If the receiver uses a free-running crystal oscillator of similar specification, when the receiver is at maximum tolerance in one direction and the transmitter is at maximum tolerance in the other direction, a total error of 100 ppm will exist.

The front end processing of the samples generated by the ADC is the same as would be used for a VCXO solution. These processes include down-sampling (sample rate reduction) and equalisation. Both of these functions are performed in FIR filters. A decimator on the output of the downsampler reduces the sample rate by the oversampling ratio.

The G.992.2 standard uses a 256 sample receive FFT at the home modem with a guard band (or prefix) of 16 samples between each set of 256 samples. Samples are collected in a shift register after the equaliser. When a symbol's worth of samples have been collected they are fed in a broad-side manner to the receive FFT.

In Figure 1, two divider blocks are shown. The first divides by the oversampling ratio (32) but has the capability to divide by one more or one less if the appropriate control input is activated.

The second divides by a constant factor of 256+16=272. In practice, this second divider has a control input which is used for initial symbol synchronisation, but this is not shown and instead it is assumed that symbol synchronisation has already been gained.

The timing recovery block examines the pilot tone or other information from the receive FFT to derive a phase error which it then integrates to form a frequency error, which it outputs. Assuming that the frequency error is stationary, the actual value produced will vary slightly during operation to keep the system locked.

The oversample divider is controlled by a justification controller. The justification controller causes the divider to occasionally divide by one different from the nominal value of 32. Such an event is called a "hard justification". The frequency of hard justifications is the beat frequency between the transmit and receive free-running clocks (assuming an equivalent transmitter that also uses an OSR of 32).

A very basic justification controller is shown in Figure 1(b). This very basic implementation ignores the boundary input signal and so justifications will occur wherever they happen, without constraint. The boundary signal is an indication to the controller of when the receiver is discarding prefix samples and can be generated directly from the output of the second divider. Since there is often considerable sample delay in the downsampler and traversal equaliser, we introduce a delay compensator into the boundary signal. The delay compensator is a static delay which was fixed at the time the FIR filters were designed. Its purpose is to delay the boundary signal such that the decimator is operating on prefix samples which will be discarded at the end of the current symbol.

The prototype receiver (Fig.1) operates by deleting or inserting oversamples. If implemented directly as shown in Figure 1, the downsampler FIR would produce a continuous output at the oversample rate and the decimator would chose which output value is selected. In practice, an implementation would be optimized not to calculate the output values, which are discarded by the decimator, but for simplicity of presentation we have not shown the optimization.

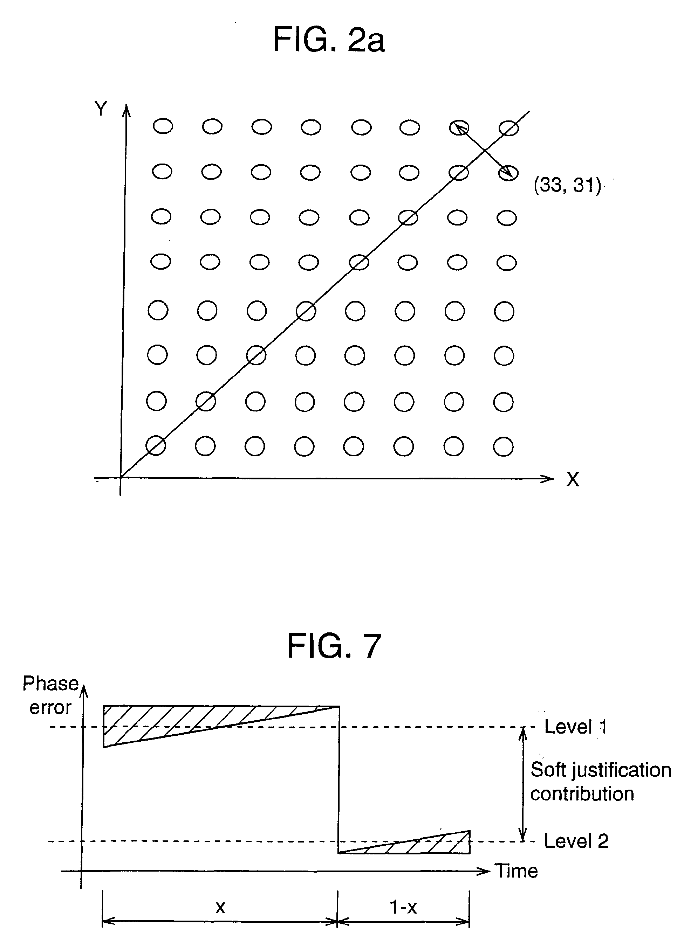

Figure 2(a) illustrates one quadrant of an 8-bit constellation for illustrating a typical vector V with respect to which a phase error can be defined.

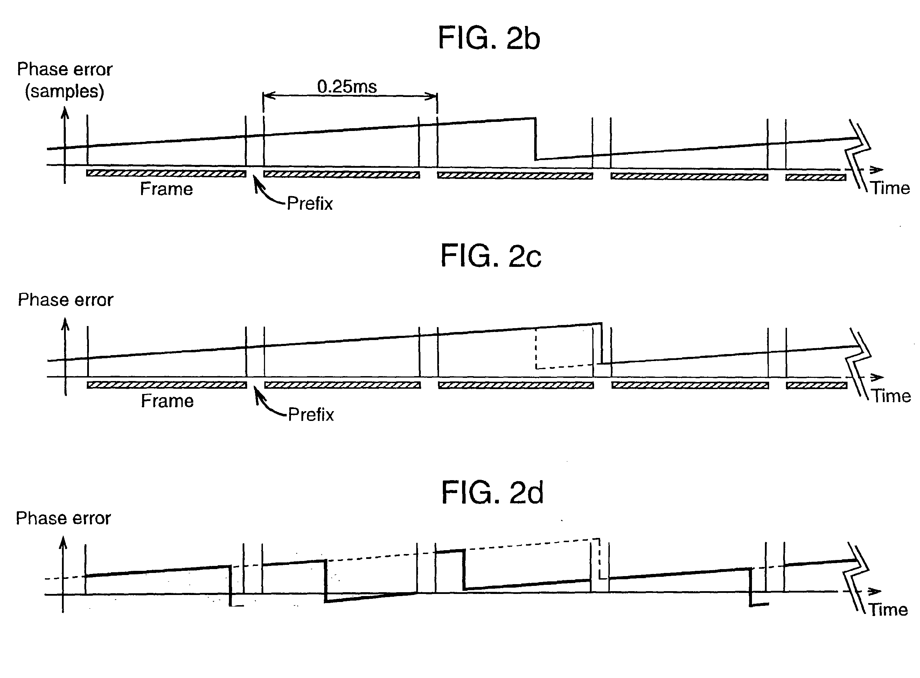

Figure 2(b) is part of a performance analysis of the prototype receiver and it shows the phase error occurring in the receiver. The phase error is shown on the y-axis. A positive gradient to the graph is shown, but the graph would be the other way up if the polarity of the error with respect to the transmitter were different. The phase error is in terms of samples and would have to be multiplied by a bin number to get the relative phase error in each bin. The error varies from 0 to 1 oversample. With an OSR factor of 32, in bin 96 one oversample is 96/256 times 2.Pi/32 = 0.073 radians, or 4.2 degrees.

The allowable phase error is given by the desired signal to noise ratio in the large constellations. Figure 2(a) shows one quadrant of a 256 point constellation and indicates the distance between the point at (31,33) and (33,31). In this constellation with a 25 dB signal to noise ratio, the phase error must be approximately

$$\frac{2(\tan^{-1}(33/31)-\pi/4)}{10^{25/20}}$$

which is 201 millidegrees.

Therefore, the phase error in the prototype is too large for direct decoding of the data. While it would be possible to correct for this after the receive FFT and to use the same approach, in reverse, on the transmit FFT, owing to the deterministic nature of the noise, the present invention solves the problem by additional insertion and deletion of oversamples before the receive FFT and after the transmit inverse FFT. The amplitude detected by the receive FFT is the cosine of the phase error, leading to a distortion level of -104.2 dBc for an angle of 201 millidegrees. This is entirely negligible.

It is noted that the DMT receiver normally contains frequency domain equalisation (FEQ) and various other timing structures to trim out static phase errors in each bin, so the critical parameter is amplitude of the phase error signal in the worst bin after normalisation to the mean in that bin.

Figure 1c shows a modification controller to cause the hard justifications to occur at boundaries. A synchronous R-S latch is used to record that a justification has been requested, but the request is saved to the following boundary. The resulting phase error signal is shown in Figure 2(b). Although the mean phase error is slightly increased in comparison to its previous value, this has no consequence, since as noted above, the mean error is trimmed out by other control loops.

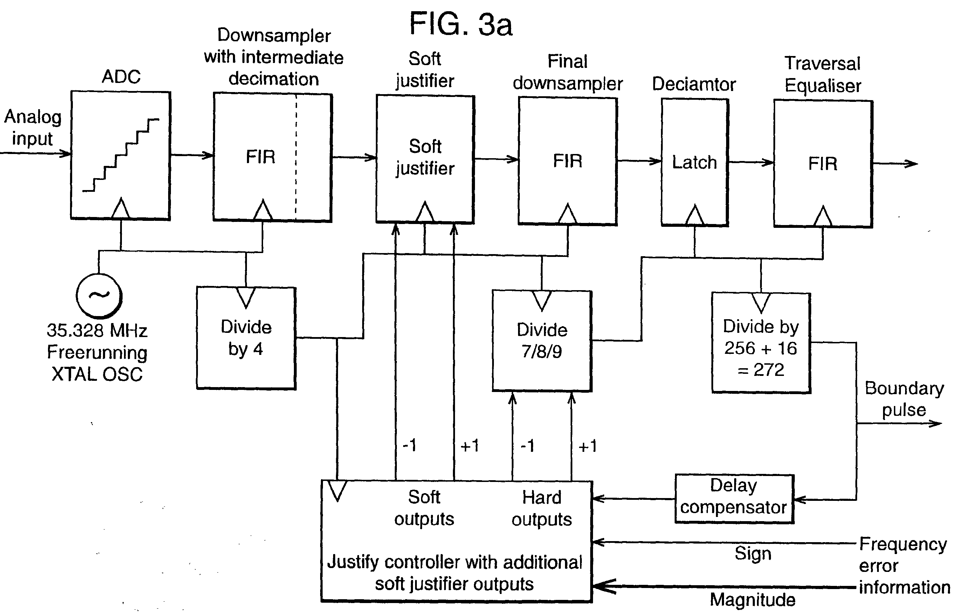

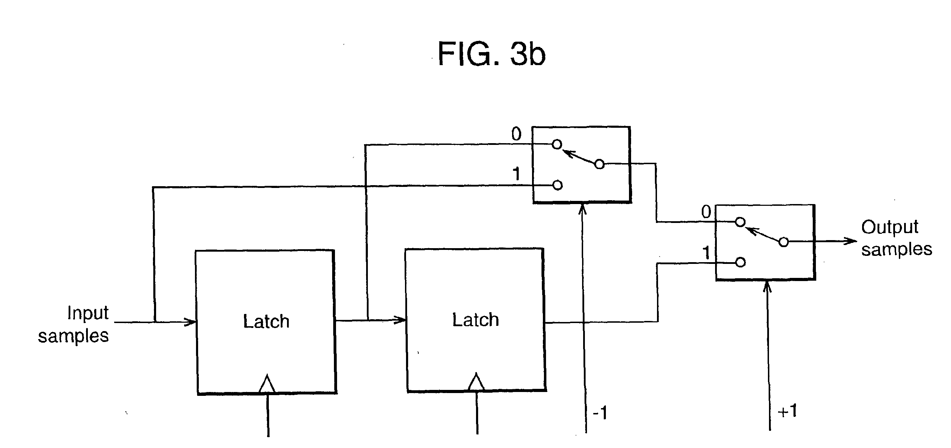

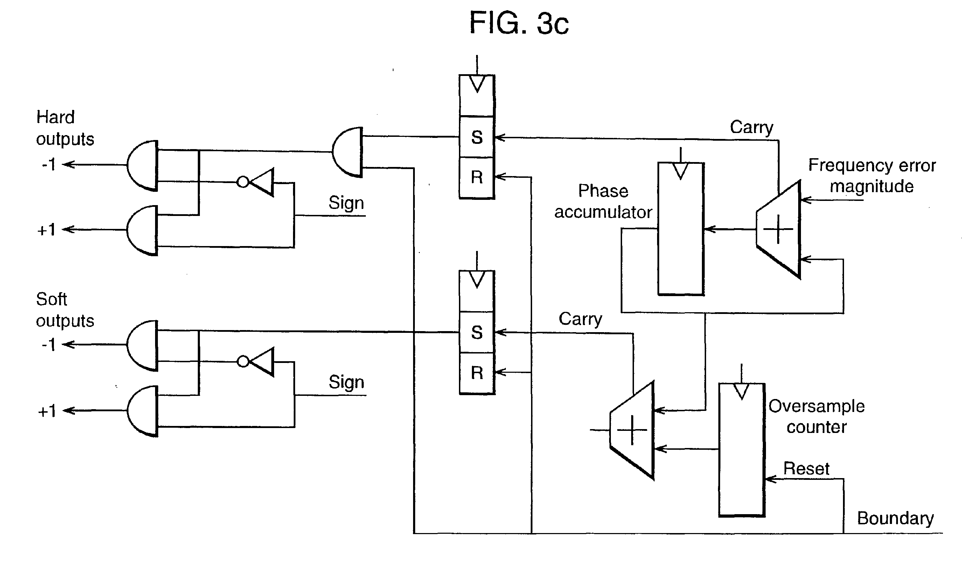

An embodiment of the invention for receiving data will now be described in more detail with reference to Fig.2(c) and Fig.3 where "soft justifications" are used.

It is a property of the FFT (and DFT) that the phase output from the receive FFT will be the correct value plus the average of the phase error over the input symbol multiplied by the bin number. If the error in each bin has a stationary average value, then the phase error after multiplication by bin number will be stationary and can be handled, by the frequency domain equaliser (FEQ). We introduce additional justifications, known as "soft justifications" such that the average in each bin is constant from symbol to symbol. A soft justification has the same polarity as a hard justification. It is placed in the body of a frame at a position based on running phase error which distorts the overall phase error to a constant value. The result of adding the soft justifications is shown in Figure 2(d).

Figure 3(a) shows details of the receive side of a soft justification system. The ADC is again shown as being clocked at an OSR of 32, but its output is immediately downsampled to an OSR of 8, and so an 8.832 Msps ADC would serve instead. The minimum OSR required for the invention to operate depends on the application environment. It is possible to use the invention where oversampling is not used. In our xDSL environment a second stage of downsampling is used to reduce the rate to the 1.104Msps rate needed by the FFT. This second stage is controlled by the hard justification outputs and hard justifications occur in the decimator which follows the downsampler.

The soft justifier is a module which can insert or delete oversamples (or samples if oversampling is not used). A block diagram for the soft justifier is shown in Figure 3(b). It contains a two-stage shift register. The output is normally taken from the centre point, but there is the capability to switch to the input or the output. Switching to the input will delete an oversample (or sample) and switching the output will repeat an oversample (or sample).

The controller circuitry for the soft justifier is added to the justification controller as shown in Figure 3(c). The oversample counter counts oversample clocks and is reset on the boundary pulse. When the sum of the oversample counter and the phase accumulator generates a carry, the soft justifier is enabled. The second RS latch makes the soft justification act until the end of the current symbol frame. The number of bits in the oversample counter should be 11 for an OSR of 8 and a 256 point transform. The number of bits in the phase accumulator could be larger for preciseness of frequency locking, in which case only the top bits of the phase accumulator need be used. If the boundary signal comes at the start of the prefix, which would be sensible to minimise unnecessary phase effects in the traversal equaliser after a hard justification, the oversample counter will overflow before the end of the symbol. Therefore, a further delay compensator for the boundary reset signal to the oversample could be used to make it start counting at the start of the data part of a symbol. This is not shown since the implementation of prefix removal may be subject to other, independent enhancements in certain implementations.

In summary, the operation of the soft justifier controller is to introduce a soft justification at a point in the frame which gets earlier in inverse linear proportion to the phase error. This cancels the variation in phase which would otherwise occur in proportion to the distance from the last hard justification. It leaves a value which is constant except for a residual quantisation error. The actual value of the constant is trimmed out by the FEQ and other timing loop functions.

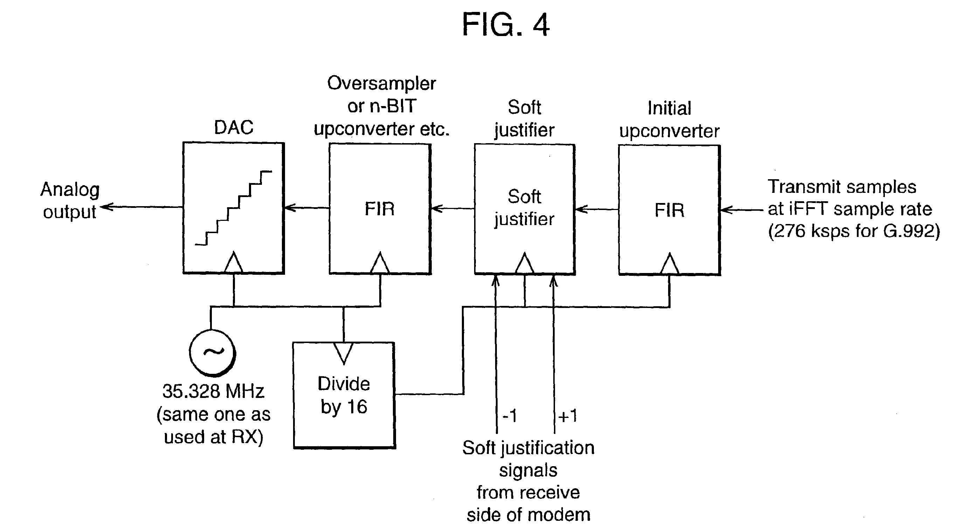

There will now be described, with reference to Fig.4, a transmitter implementation having output stages with soft justification.

It is possible to have an xDSL modem which transmits using its own free-running clock, but the G. 992.1 and G.992.2 standards require that the modem at the home uses loop timing and that transmitted symbol frames have a small fixed delay offset from received symbol frames. Therefore the clocks, boundary signal and hard justification events used on the receive side can and should be used on the transmit side. The current invention can be used where the soft justification signals generated at the receiver control a second justifier at the transmitter.

Figure 4 shows the structure of the transmitter using loop timing and soft justification. The transmit FFT operates at one quarter the sample rate of the receive FFT, so the transmit oversample rate can also be one quarter of the receive rate for the same phase errors. This is indicated in the figure by the divide by 16. Note that the same crystal oscillator is used for transmit and receive, hence it is shown dotted on the transmit side.

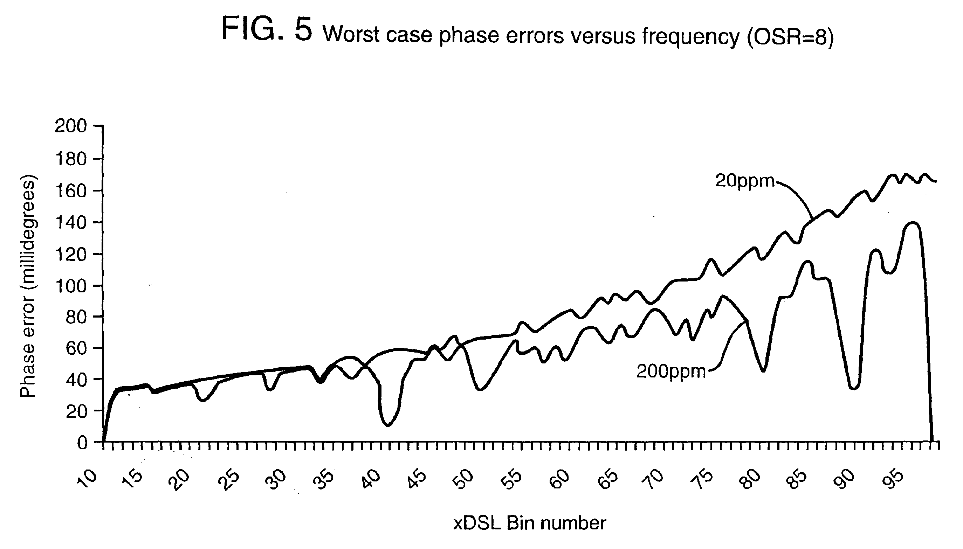

A simulation of the system was implemented using a simple C program. The test data tones were quantised in the voltage domain to an amplitude of 8192 samples. Figure 5 shows the phase variation encountered in each bin over many symbol starting phases for clock errors of 20 and 200 ppm for a G.992.2 system using bins 10 to 96 with a 256 point receive FFT and OSR of 8. The symbol starting phase interacts slightly with the phase of the test tone (constellation angle) to generate a ripple in the detected phase: the y-axis of the graph is the peak-to-peak variation in detected phase over a large number of starting phases in milli-degrees. Earlier we determined a 200 milli-degree margin for phase noise amplitude. The graph shows that the peak to peak noise (twice the amplitude) is in all cases it is below the 200 milli-degree requirement, giving at least a 2:1 further margin.

Note that bins below 32 are not normally used for data reception in a G.992 system, but they are included in the results for completeness.

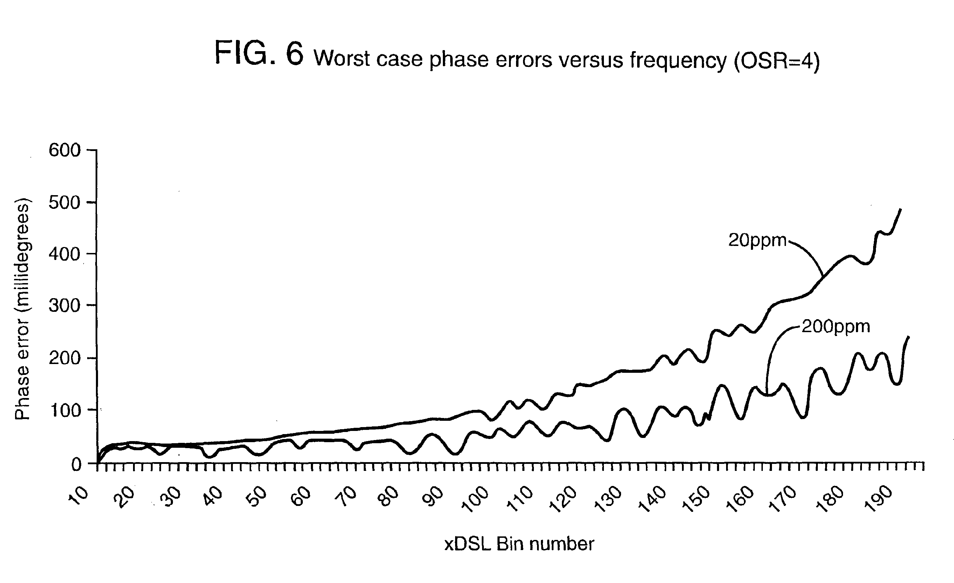

Figure 6 shows the performance of the system in a G.992.1 system with an oversample rate of four and 512 point transforms. The phase error starts to go above half a degree in the very high bins which potentially limits the usefulness of the technique in that large constellations cannot be supported on these bins. However, in a real DSL system, other parameters, such as noise or ADC jitter and resolution may be the real limits. It is not impossible that the digital solution gives superior performance to a real VCXO.

The mathematics which underlies the invention will now be explained. We consider also very large frequency errors,and the potential need to replace the adder used to decide when soft justification is performed with a function stored in ROM.

A simple adder uses a linear approximation that places the soft justification at a point through the cycle which only becomes 100 percent accurate as the relative frequency error approaches zero. This phenomenon is illustrated in Figure 7 and shows a soft justification at a fraction x of the way through in the body of a symbol frame. The mean value of the phase error in the interval is given by the weighted average of the two levels of phase error, which themselves are the mean values of the hypotenuse of the shaded triangles. The mean value is x.(levell)+(1-x).level2. For low values of frequency error, the gradient of the phase error signal is low, and the shaded triangles have negligible size. For larger values of frequency error, the triangles grow in size and a non-linear affect occurs according to the following formula. Let m be the gradient and s0 be the starting phase, then the value of level 1 is (s0 -s0 + mx)/2 and the value of level 2 is (s0+mx-1+s0+m-1)/2. These must be multiplied by x and (1-x) respectively producing s0+(2x-2+m)/2.

The ideal value of x is given by inverting the formula and ignoring constant terms. This is found to be 1-s0-m/2.

The adder sums x and s0+mx and so generates its first carry, which causes the soft justification, when x has the value (1-s0)/(1+m). Substituting this in the above formula we have the following expression for the mean phrase error: s0-1+m/2+1/(1+m)-s0/(1+m). This can be seen to be a constant plus an error term of s0(1-1/(1+m)). The constant is the desired constant phase error produced by the invention. When m is small, the error term is negligible, but if m is larger, then a more complex function than a simple adder could be considered in order to minimize the effect.

The smallest value of m that would cause the decision produced by the simple adder to be non-optimum is when 1-s0-m/2 is different from (1-s0)/(1+m) by one oversample for the worst case value of s0. This will only happen when m is near one, which is inconceivable. Indeed, the effect is dominated by noise in any real implementation. The correction ROM function is not needed.

Reference is also made to our co-pending UK patent applications, entitled:

"Method and Apparatus for DMA Data Transfer"

"QAMD"

"Digital Signal Processor for FIR Filtering".

This invention may also be used in combination with the inventions disclosed in these co-pending applications, taken singly or in any combination.

**Claims**

1. A method of sample rate compensation in a communications device where:

(a) a stream of symbols are transmitted in accordance with a standard symbol rate derived from a clock external to the device;
(b) the communications device samples the input symbol stream at a local sampling rate derived from a local clock and thereby creates a received sample stream; and
(c) the commmunications device derives a reference sample rate from the received sample stream (which is related to the standard symbol rate and the external clock) for comparison with the local sampling rate;
the method including:

(i) comparing the local sampling rate with the reference sampling rate and determining the error in the local sample rate;
(ii) deriving a timing recovery signal related to the magnitude of the error;
(iii) dividing the local clock rate by a factor related to the timing recovery signal to reduce the error; and

(iv) either removing one or more samples from, or adding one or more samples to the received sample stream, at predetermined intervals, depending on the timing recovery signal to further reduce the error, whereby the difference in sample rates is compensated.

2. A method according to Claim 1, wherein the input symbol stream is oversampled with respect to the external clock and subsequently downsampled with respect to the local clock.

3. A method according to Claim 2, wherein the sample stream is downsampled twice and steps (iii) and (iv) are carried out at respective downsamplings.

4. A method according to any of Claims 2 or 3, wherein a sample may be inserted or deleted directly before or directly after any of the downsampling stages.

5. A method according to any of Claims 2 to 4, wherein a downsampling ratio is increased or decreased so as to provide a 'hard justification' phase error compensation, and samples are added or removed to provide a "soft justification" phase error compensation.

6. A method according to any preceding claim wherein there is an intersymbol boundary between symbols in the received stream and the effect of applying steps (i) and (ii) is to adjust the samples at an intersymbol boundary.

7. A method according to claim 6, wherein the average phase error is subsequently compensated for by frequency domain equalisation operating on Fast Fourier Transforms of the received samples.

8. A method according to any preceding claim, wherein the input symbol stream comprises a pilot tone of constant frequency which is used in deriving a difference between the reference and local sampling rates.

9. A method according to any preceding claim when used in communications systems which employ digital subscriber line (DSL) methods and their derivatives.

10. A method according to any preceding claim, including the steps of:

A/D conversion of a received DMT signal;
down-sampling to reduce the sampling rate of digital samples from the A/D conversion by an over-sampling ratio;
calculating the fourier transform of the data;

deriving a phase error signal using the results of the fourier transform; and

dividing the output of the local oscillator by an adjustable over-sampling ratio so as to provide the factor for an adjustable divisor; and deriving the timing error recovery signal.

11. A method according to any preceding claim, where the communications device comprises a DMT receiver for receiving symbol frames, each symbol frame including a plurality of carrier frequency channels or bins that contain a number of bits that the carrier channel can support; the compensation being applied so as to cause samples are added or subtracted at bin numbers in order to maintain a constant average in each bin from symbol to symbol, thereby causing the phase error in the receiver (due to sample rate difference) to be constant on average.

12. A method according to any preceding claim, when applied in a system which includes a transmitter for transmitting the stream of symbols in accordance with the standard symbol rate derived from a clock local to the transmitter and external to the receiving device; the timing recovery signal being sent by the receiving device to the transmitter so as to change the apparent phase of the output of the transmitter (with respect to sample rate difference) so that the phase difference between the transmitter and the reciving device remains constant on average.

13. A method according to any preceding claim wherein the local clock is a free running oscillator.

14. A method according to any preceding claim including the step of delaying a boundary signal which designates the start of a symbol frame, so that downsampling can be effected on prefix samples which will be discarded at the end of a current symbol, to compensate for sample delay in down-sampling and equalisation.

15. A digital communications device including means for sample rate compensation in a system where: (a) a stream of symbols are transmitted in accordance with a standard symbol rate derived from a clock external to the device; (b) the communications device samples the input symbol stream at a local sampling rate derived from a local clock and thereby creates a received sample stream; and (c) the communications device derives a reference sample rate from the received sample stream (which is related to the standard symbol rate and the external clock) for comparison with the local sampling rate; the device further including:

(i) means for comparing the local sampling rate with the reference sampling rate and determining the error in the local sample rate;

(ii) means for deriving a timing recovery signal related to the magnitude of the error;

(iii) means for dividing the local clock rate by a factor related to the timing recovery signal to reduce the error; and

(iv) means for either removing one or more samples from, or adding one or more samples to the received sample stream, at predetermined intervals, depending on the timing recovery signal to further reduce the error, whereby the difference in sample rates is compensated.

16. A device according to claim 12 adapted as a DMT receiver wherein symbol frames include a plurality of carrier frequency channels or bins, each bin containing a number of bits that the carrier channel can support; the compensation means being operative to cause samples to be added or subtracted at bin numbers in order to maintain a constant average in each bin from symbol to symbol, thereby causing the phase error in the receiver (due to sample rate difference) to be constant on average.

17. A system including the device according to claim 15 or 16, and further including a DMT transmitter for transmitting the stream of symbols in accordance with the standard symbol rate derived from a clock local to the transmitter and external to the receiving device; the receiving device having means for sending the timing recovery signal to the transmitter so as to change the apparent phase of the output of the transmitter (with respect to sample rate difference) so that the phase difference between the transmitter and the reciving device remains constant on average.

18. A device or system according to any of claims 15-18, where the local clock includes a free running oscillator.

19. A device or system according to any of claim 15-18 adapted to perform ADSL or xDSL sample rate conversion.

20. A device or system according to any of claim 15-19 including means for using fast Fourier transforms (FFTs) on either downsamples to derive a timing recovery error signal for compensating phase error in a receiver, or on upsamples to derive a timing recovery error signal for compensating phase error in a transmitter, the samples being removed or added at the stage of down or upsampling.

21. A device or system according to any of claims 15-20, wherein the device includes:

an A/D converter for a received DMT signal;
down-sampling means to reduce the sampling rate of digital samples from the A/D conversion;
decimation means to further reduce the latter sampling rate by an over-sampling ratio; a frequency domain equaliser for equalising the decimated samples;
means for performing FFT's to the output of the equaliser so as to provide a phase error signal;
a divider for dividing the output of the local oscillator by an adjustable over-sampling ratio so as to provide an adjustable divisor for the frequency domain equaliser, and
timing error recovery means for deriving a timing recovery error signal from the phase error signal for controlling the adjustable divisor and for adding or subtracting samples at the down-sampling means.

22. A device or system according to claim 21 further including means for delaying a boundary signal, designating the start of a symbol frame, so that decimation operates on prefix samples which will be discarded at the end of a current symbol, to compensate for sample delay in down-sampling and equalisation.

# FIG. 1a

EP 1 128 622 A2

FIG. 1b

FIG. 1c

# FIG. 2a

(33, 31)

# FIG. 7

FIG. 2b

FIG. 2c

FIG. 2d

FIG. 3a

FIG. 3b

EP 1 128 622 A2

FIG. 3c

Hard outputs

Soft outputs

Sign

Sign

S

R

S

R

Phase accumulator

Carry

Frequency error magnitude

Carry

Oversample counter

Reset

Boundary

-1

+1

-1

+1

# FIG. 4

EP 1 128 622 A2

FIG. 5 Worst case phase errors versus frequency (OSR=8)

FIG. 6 Worst case phase errors versus frequency (OSR=4)

EP 1 128 622 A2